# EUROPEAN PATENT SPECIFICATION

(11) **EP 3 560 167 B1**
(45) Date of publication and mention of the grant of the patent: **10.11.2021**
(21) Application number: 17832134.5
(22) Date of filing: 19.12.2017
(51) Int. Cl.: H04L 29/06

(54) **TECHNIQUES AND APPARATUSES FOR CALL HANDLING DURING A USER EQUIPMENT RINGING STATE**
TECHNIKEN UND VORRICHTUNGEN ZUR ANRUFBEHANDLUNG WÄHREND DES KLINGELZUSTANDS EINER BENUTZERAUSRÜSTUNG
TECHNIQUES ET APPAREILS DE GESTION D'APPEL PENDANT UN ÉTAT DE SONNERIE D'ÉQUIPEMENT UTILISATEUR

(30) Priority: 23.12.2016 US 201662438668 P; 26.04.2017 US 201715497732
(43) Date of publication of application: 30.10.2019
(73) Proprietor: QUALCOMM Incorporated, San Diego, CA 92121-1714 (US)
(72) Inventor: SINGH, Jagdeep, San Diego California 92121 (US); PANWAR, Neeraj, San Diego California 92121 (US); JUNEJA, Ishdeep Singh, San Diego California 92121 (US); T V, Vinaya Kumara, San Diego California 92121 (US); BHARDWAJ, Ashish, San Diego California 92121 (US)
(74) Representative: Bardehle Pagenberg Partnerschaft mbB Patentanwälte Rechtsanwälte
(86) International application number: PCT/US2017/067417
(87) International publication number: WO 2018/118988

(56) References cited:
- EP-A1- 1 890 472
- WO-A1-2015/196751

## Description

### FIELD OF THE DISCLOSURE

Aspects of the present disclosure generally relate to wireless communication, and more particularly to techniques and apparatuses for call handling during a user equipment ringing state.

### BACKGROUND

Wireless communication systems are widely deployed to provide various telecommunication services, such as telephony, video, data, messaging, and broadcasts. Typical wireless communication systems may employ multiple-access technologies capable of supporting communication with multiple users by sharing available system resources (e.g., bandwidth, transmit power, and/or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency divisional multiple access (SC-FDMA) systems, and time division synchronous code division multiple access (TD-SCDMA) systems.

These multiple access technologies have been adopted in various telecommunications standards to provide a common protocol that enables different wireless devices to communicate on a municipal, a national, a regional, and even a global level. An example of a telecommunication standard is Long Term Evolution (LTE). LTE is a set of enhancements to the Universal Mobile Telecommunications System (UMTS) mobile standard promulgated by Third Generation Partnership Project (3GPP). LTE is designed to better support mobile broadband Internet access by improving spectral efficiency, lowering costs, improving services, using new spectrum, and integrating with other open standards using OFDMA on the downlink (DL), SC-FDMA on the uplink (UL), and multiple-input multiple-output (MIMO) antenna technology.

EP 1890 472 A1 discloses a method for providing ring-back tone in real time in a communication network, comprises: the called terminal receives the call request of the calling terminal transmitted from the network side; the called terminal can send a ring-back tone indication value to the network side; the ring-back tone unit at network side memorizes a great deal of ring-back tone data according to the ringbacktone indication value, so it can find the corresponding ring-back tone according to the received ring-back tone indication value, and play it to the calling terminal in real time. A system and terminal for providing ringback tone in real time in a communication network are also provided. Based an the invention, the called subscriber can send different ring-back tone indication value in real time according to the current instance, to achieve the aim to play different ring-back tone to the calling terminal, it can well satisfy the individualization request of the subscriber, as well as further improve the quality of the communication service.

WO 2015/196751 A1 discloses methods, apparatuses and systems for playing video media, and a computer storage medium. The method applied to a network side includes: receiving an audio call requestfrom a calling terminal; acquiring video media information that needs to be played in a current call; and playing the video media forthe calling terminal. The method applied to a terminal side includes: sending an audio call request to a network side; and receiving and playing video media from the network side. The apparatus applied to a network side includes: a receiving module arranged to receive an audio call request from a calling terminal; an acquisition module arranged to acquire video media information that needs to be played in a current call; and an execution module arranged to play the vide media for the calling terminal. The apparatus applied to a terminal side includes: a sending module arranged to send an audio call request to a network side; and an execution module arranged to receive and play video media from the network side.

### SUMMARY

In some aspects, a method of wireless communication according to independent claim 1, includes transmitting, by a first wireless communication device, to a second wireless communication device and a third wireless communication device, an indication that the first wireless communication device is in a ringing state based at least in part on a first call message associated with the second wireless communication device and a second call message received from the third wireless communication device, wherein the second call message is received while the first wireless communication device is in the ringing state due to the first call message. The method includes selectively proceeding, by the first wireless communication device, based on at least one of the first call message and the second call message, and in response to user input that indicates whether to accept at least one of the first call message, the second call message, or both the first call message and the second call message. Further detailed embodiments are defined in the dependent claims 2-9.

In some aspects, a first wireless communication device may include a memory and one or more processors operatively coupled to the memory. The one or more processors are configured, according to independent claim 10, to execute the steps of any one of the claims 1 to 9.

In some aspects, a non-transitory computer-readable medium may store one or more instructions for wireless communication. The one or more instructions, when executed by one or more processors of a first wireless communication device, may cause the one or more processors to perform, according to independent claim 11, the steps of any one of the claims 1 to 9.

The one or more instructions, when executed by the one or more processors, may cause the one or more processors to selectively proceed based on at least one of the first call message or the second call message and

in response to user input that indicates whether to accept at least one of the first call message, the second call message, or both the first call message and the second call message.

Aspects generally include a method, apparatus, system, computer program product, non-transitory computer-readable medium, user equipment, wireless communication device, and processing system as substantially described herein with reference to and as illustrated by the accompanying drawings.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure if they not depart from the scope of the appended claims. Characteristics of the concepts disclosed herein, both their organization and method of operation, together with associated advantages will be better understood from the following description when considered in connection with the accompanying figures. Each of the figures is provided for the purpose of illustration and description, and not as a definition of the limits of the claims.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example deployment in which multiple wireless networks have overlapping coverage, in accordance with various aspects of the present disclosure.
Fig. 2 is a diagram illustrating an example access network in an LTE network architecture, in accordance with various aspects of the present disclosure.
Fig. 3 is a diagram illustrating an example of a downlink frame structure in LTE, in accordance with various aspects of the present disclosure.
Fig. 4 is a diagram illustrating an example of an uplink frame structure in LTE, in accordance with various aspects of the present disclosure.
Fig. 5 is a diagram illustrating an example of a radio protocol architecture for a user plane and a control plane in LTE, in accordance with various aspects of the present disclosure.
Fig. 6 is a diagram illustrating example components of an evolved Node B and a user equipment in an access network, in accordance with various aspects of the present disclosure.
Fig. 7 is a diagram illustrating an example of call handling during a user equipment ringing state, in accordance with various aspects of the present disclosure.
Fig. 8 is a diagram illustrating another example of call handling during a user equipment ringing state, in accordance with various aspects of the present disclosure.
Fig. 9 is a diagram illustrating another example of call handling during a user equipment ringing state, in accordance with various aspects of the present disclosure.
Fig. 10 is a diagram illustrating another example of call handling during a user equipment ringing state, in accordance with various aspects of the present disclosure.
Fig. 11 is a diagram illustrating another example of call handling during a user equipment ringing state, in accordance with various aspects of the present disclosure.
Fig. 12 is a diagram illustrating an example process performed, for example, by a wireless communication device, in accordance with various aspects of the present disclosure.

### DETAILED DESCRIPTION

The detailed description set forth below, in connection with the appended drawings, is intended as a description of various configurations and is not intended to represent the only configurations in which the concepts described herein may be practiced. The detailed description includes specific details for providing a thorough understanding of the various concepts. However, it will be apparent to those skilled in the art that these concepts may be practiced without these specific details.

The techniques described herein may be used for one or more of various wireless communication networks such as code division multiple access (CDMA) networks, time division multiple access (TDMA) networks, frequency division multiple access (FDMA) networks, orthogonal FDMA (OFDMA) networks, single carrier FDMA (SC-FDMA) networks, or other types of networks. A CDMA network may implement a radio access technology (RAT) such as universal terrestrial radio access (UTRA), CDMA2000, and/or the like. UTRA may include wideband CDMA (WCDMA) and/or other variants of CDMA. CDMA2000 may include Interim Standard (IS)-2000, IS-95 and IS-856 standards. IS-2000 may also be referred to as 1x radio transmission technology (1xRTT), CDMA2000 IX, and/or the like. A TDMA network may implement a RAT such as global system for mobile communications (GSM), enhanced data rates for GSM evolution (EDGE), or GSM/EDGE radio access network (GERAN). An OFDMA network may implement a RAT such as evolved UTRA (E-UTRA), ultra mobile broadband (UMB), Institute of Electrical and Electronics Engineers (IEEE) 802.11 (Wi-Fi), IEEE 802.16 (WiMAX), IEEE 802.20, Flash-OFDM, and/or the like. UTRA and E-UTRA may be part of the universal mobile telecommunication system (UMTS). 3GPP long-term evolution (LTE) and LTE-Advanced (LTE-A) are example releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the wireless networks and RATs mentioned above as well as other wireless networks and RATs.

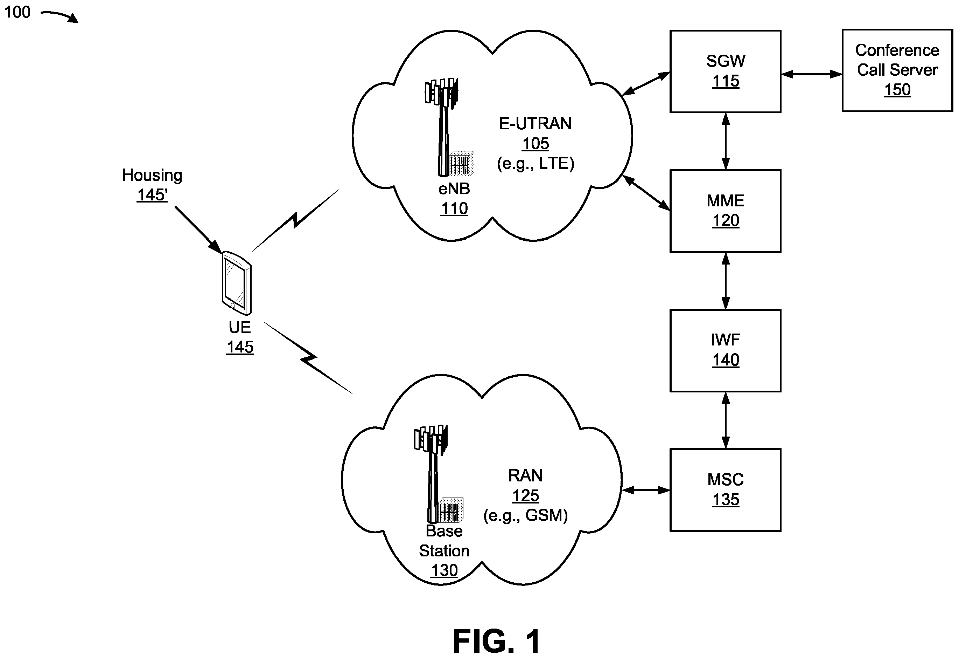

Fig. 1 is a diagram illustrating an example deployment 100 in which multiple wireless networks have overlapping coverage, in accordance with various aspects of the present disclosure. However, wireless networks may not have overlapping coverage in aspects. As shown, example deployment 100 may include an evolved universal terrestrial radio access network (E-UTRAN) 105, which may include one or more evolved Node Bs (eNBs) 110, and which may communicate with other devices or networks via a serving gateway (SGW) 115 and/or a mobility management entity (MME) 120. As further shown, example deployment 100 may include a radio access network (RAN) 125, which may include one or more base stations 130, and which may communicate with other devices or networks via a mobile switching center (MSC) 135 and/or an inter-working function (IWF) 140. As further shown, example deployment 100 may include one or more user equipment (UEs) 145 capable of communicating via E-UTRAN 105 and/or RAN 125.

E-UTRAN 105 may support, for example, LTE or another type of RAT. E-UTRAN 105 may include eNBs 110 and other network entities that can support wireless communication for UEs 145. Each eNB 110 may provide communication coverage for a particular geographic area. The term "cell" may refer to a coverage area of eNB 110 and/or an eNB subsystem serving the coverage area on a specific frequency channel.

SGW 115 may communicate with E-UTRAN 105 and may perform various functions, such as packet routing and forwarding, mobility anchoring, packet buffering, initiation of network-triggered services, and/or the like. MME 120 may communicate with E-UTRAN 105 and SGW 115 and may perform various functions, such as mobility management, bearer management, distribution of paging messages, security control, authentication, gateway selection, and/or the like, for UEs 145 located within a geographic region served by MME 120 of E-UTRAN 105. The network entities in LTE are described in 3GPP TS 36.300, entitled "Evolved Universal Terrestrial Radio Access (E-UTRA) and Evolved Universal Terrestrial Radio Access Network (E-UTRAN); Overall description," which is publicly available.

RAN 125 may support, for example, GSM or another type of RAT. RAN 125 may include base stations 130 and other network entities that can support wireless communication for UEs 145. MSC 135 may communicate with RAN 125 and may perform various functions, such as voice services, routing for circuit-switched calls, and mobility management for UEs 145 located within a geographic region served by MSC 135 of RAN 125. In some aspects, IWF 140 may facilitate communication between MME 120 and MSC 135 (e.g., when E-UTRAN 105 and RAN 125 use different RATs). Additionally, or alternatively, MME 120 may communicate directly with an MME that interfaces with RAN 125, for example, without IWF 140 (e.g., when E-UTRAN 105 and RAN 125 use a same RAT). In some aspects, E-UTRAN 105 and RAN 125 may use the same frequency and/or the same RAT to communicate with UE 145. In some aspects, E-UTRAN 105 and RAN 125 may use different frequencies and/or RATs to communicate with UEs 145. As used herein, the term base station is not tied to any particular RAT, and may refer to an eNB (e.g., of an LTE network) or another type of base station associated with a different type of RAT.

In general, any number of wireless networks may be deployed in a given geographic area. Each wireless network may support a particular RAT and may operate on one or more frequencies. A RAT may also be referred to as a radio technology, an air interface, and/or the like. A frequency or frequency ranges may also be referred to as a carrier, a frequency channel, and/or the like. Each frequency or frequency range may support a single RAT in a given geographic area in order to avoid interference between wireless networks of different RATs.

UE 145 may be stationary or mobile and may also be referred to as a mobile station, a terminal, an access terminal, a wireless communication device, a subscriber unit, a station, and/or the like. UE 145 may be a cellular phone, a personal digital assistant (PDA), a wireless modem, a wireless communication device, a handheld device, a laptop computer, a cordless phone, a wireless local loop (WLL) station, and/or the like. UE 145 may be included inside a housing 145' that houses components of UE 145, such as processor components, memory components, and/or the like.

Upon power up, UE 145 may search for wireless networks from which UE 145 can receive communication services. If UE 145 detects more than one wireless network, then a wireless network with the highest priority may be selected to serve UE 145 and may be referred to as the serving network. UE 145 may perform registration with the serving network, if necessary. UE 145 may then operate in a connected mode to actively communicate with the serving network. Alternatively, UE 145 may operate in an idle mode and camp on the serving network if active communication is not required by UE 145.

UE 145 may operate in the idle mode as follows. UE 145 may identify all frequencies/RATs on which it is able to find a "suitable" cell in a normal scenario or an "acceptable" cell in an emergency scenario, where "suitable" and "acceptable" are specified in the LTE standards. UE 145 may then camp on the frequency/RAT with the highest priority among all identified frequencies/RATs. UE 145 may remain camped on this frequency/RAT until either (i) the frequency/RAT is no longer available at a predetermined threshold or (ii) another frequency/RAT with a higher priority reaches this threshold. In some aspects, UE 145 may receive a neighbor list when operating in the idle mode, such as a neighbor list included in a system information block type 5 (SIB 5) provided by an eNB of a RAT on which UE 145 is camped. Additionally, or alternatively, UE 145 may generate a neighbor list. A neighbor list may include information identifying one or more frequencies, at which one or more RATs may be accessed, priority information associated with the one or more RATs, and/or the like.

Conference call server 150 includes one or more devices, such as one or more servers, capable of connecting multiple UEs 145 on a conference call (e.g., three or more UEs 145). For example, conference call server 150 may include an application server (e.g., a telephony application server), a call session control function (CSCF) device, and/or a similar type of device. Conference call server 150 may communicate with one or more UEs 145 via one or more SGWs 115 (e.g., via one or more other devices) to receive call messages and/or to connect UEs 145 on a conference call.

The number and arrangement of devices and networks shown in Fig. 1 are provided as an example. In practice, there may be additional devices and/or networks, fewer devices and/or networks, different devices and/or networks, or differently arranged devices and/or networks than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) shown in Fig. 1 may perform one or more functions described as being performed by another set of devices shown in Fig. 1.

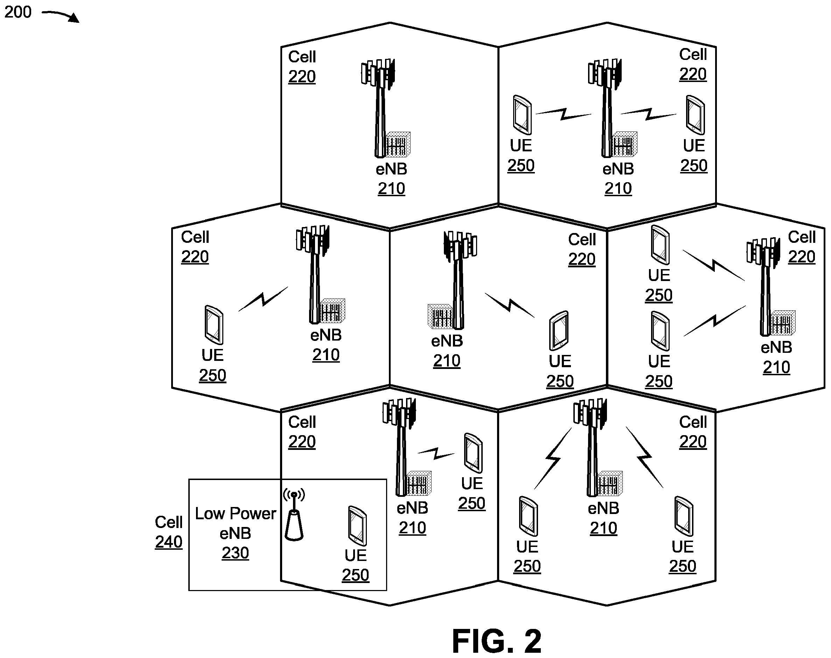

Fig. 2 is a diagram illustrating an example access network 200 in an LTE network architecture, in accordance with various aspects of the present disclosure. As shown, access network 200 may include one or more eNBs 210 (sometimes referred to as "base stations" herein) that serve a corresponding set of cellular regions (cells) 220, one or more low power eNBs 230 that serve a corresponding set of cells 240, and a set of UEs 250.

Each eNB 210 may be assigned to a respective cell 220 and may be configured to provide an access point to a RAN. For example, eNB 110, 210 may provide an access point for UE 145, 250 to E-UTRAN 105 (e.g., eNB 210 may correspond to eNB 110, shown in Fig. 1) or may provide an access point for UE 145, 250 to RAN 125 (e.g., eNB 210 may correspond to base station 130, shown in Fig. 1). In some cases, the terms base station and eNB may be used interchangeably, and a base station, as used herein, is not tied to any particular RAT. UE 145, 250 may correspond to UE 145, shown in Fig. 1. Fig. 2 does not illustrate a centralized controller for example access network 200, but access network 200 may use a centralized controller in some aspects. The eNBs 210 may perform radio related functions including radio bearer control, admission control, mobility control, scheduling, security, and network connectivity (e.g., to SGW 115).

As shown in Fig. 2, one or more low power eNBs 230 may serve respective cells 240, which may overlap with one or more cells 220 served by eNBs 210. The eNBs 230 may correspond to eNB 110 associated with E-UTRAN 105 and/or base station 130 associated with RAN 125, shown in Fig. 1. A low power eNB 230 may be referred to as a remote radio head (RRH). The low power eNB 230 may include a femto cell eNB (e.g., home eNB (HeNB)), a pico cell eNB, a micro cell eNB, and/or the like.

A modulation and multiple access scheme employed by access network 200 may vary depending on the particular telecommunications standard being deployed. In LTE applications, OFDM is used on the downlink (DL) and SC-FDMA is used on the uplink (UL) to support both frequency division duplexing (FDD) and time division duplexing (TDD). The various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. As another example, these concepts may also be extended to UTRA employing WCDMA and other variants of CDMA (e.g., such as TD-SCDMA, GSM employing TDMA, E-UTRA, and/or the like), UMB, IEEE 802.11 (Wi-Fi), IEEE 802.16 (WiMAX), IEEE 802.20, Flash-OFDM employing OFDMA, and/or the like. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 210 may have multiple antennas supporting MIMO technology. The use of MIMO technology enables eNBs 210 to exploit the spatial domain to support spatial multiplexing, beamforming, and transmit diversity. Spatial multiplexing may be used to transmit different streams of data simultaneously on the same frequency. The data streams may be transmitted to a single UE 145, 250 to increase the data rate or to multiple UEs 250 to increase the overall system capacity. This may be achieved by spatially precoding each data stream (e.g., applying a scaling of an amplitude and a phase) and then transmitting each spatially precoded stream through multiple transmit antennas on the DL. The spatially precoded data streams arrive at the UE(s) 250 with different spatial signatures, which enables each of the UE(s) 250 to recover the one or more data streams destined for that UE 145, 250. On the UL, each UE 145, 250 transmits a spatially precoded data stream, which enables eNBs 210 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

The number and arrangement of devices and cells shown in Fig. 2 are provided as an example. In practice, there may be additional devices and/or cells, fewer devices and/or cells, different devices and/or cells, or differently arranged devices and/or cells than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) shown in Fig. 2 may perform one or more functions described as being performed by another set of devices shown in Fig. 2.

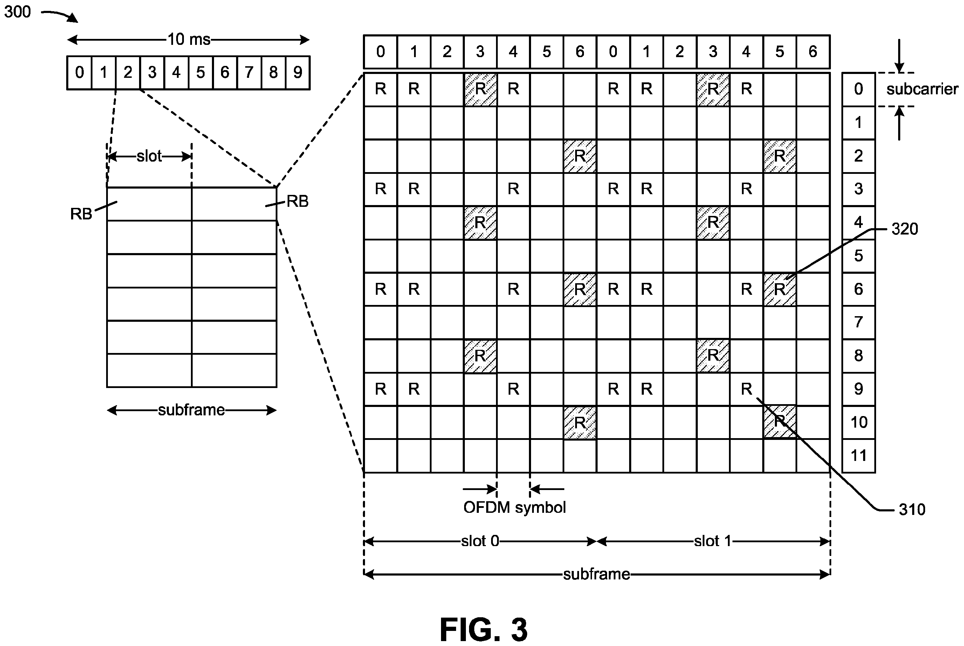

Fig. 3 is a diagram illustrating an example 300 of a downlink (DL) frame structure in LTE, in accordance with various aspects of the present disclosure. A frame (e.g., of 10 ms) may be divided into 10 equally sized sub-frames with indices of 0 through 9. Each sub-frame may include two consecutive time slots. A resource grid may be used to represent two time slots, each time slot including a resource block (RB). The resource grid is divided into multiple resource elements. In LTE, a resource block includes 12 consecutive subcarriers in the frequency domain and, for a normal cyclic prefix in each OFDM symbol, 7 consecutive OFDM symbols in the time domain, or 84 resource elements. For an extended cyclic prefix, a resource block includes 6 consecutive OFDM symbols in the time domain and has 72 resource elements. Some of the resource elements, as indicated as R 310 and R 320, include DL reference signals (DL-RS). The DL-RS include Cell-specific RS (CRS) (also sometimes called common RS) 310 and UE-specific RS (UE-RS) 320. UE-RS 320 are transmitted only on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

In LTE, an eNB may send a primary synchronization signal (PSS) and a secondary synchronization signal (SSS) for each cell in the eNB. The primary and secondary synchronization signals may be sent in symbol periods 6 and 5, respectively, in each of subframes 0 and 5 of each radio frame with the normal cyclic prefix (CP). The synchronization signals may be used by UEs for cell detection and acquisition. The eNB may send a Physical Broadcast Channel (PBCH) in symbol periods 0 to 3 in slot 1 of subframe 0. The PBCH may carry certain system information.

The eNB may send a Physical Control Format Indicator Channel (PCFICH) in the first symbol period of each subframe. The PCFICH may convey the number of symbol periods (M) used for control channels, where M may be equal to 1, 2 or 3 and may change from subframe to subframe. M may also be equal to 4 for a small system bandwidth, e.g., with less than 10 resource blocks. The eNB may send a Physical HARQ Indicator Channel (PHICH) and a Physical Downlink Control Channel (PDCCH) in the first M symbol periods of each subframe. The PHICH may carry information to support hybrid automatic repeat request (HARQ). The PDCCH may carry information on resource allocation for UEs and control information for downlink channels. The eNB may send a Physical Downlink Shared Channel (PDSCH) in the remaining symbol periods of each subframe. The PDSCH may carry data for UEs scheduled for data transmission on the downlink.

The eNB may send the PSS, SSS, and PBCH in the center 1.08 MHz of the system bandwidth used by the eNB. The eNB may send the PCFICH and PHICH across the entire system bandwidth in each symbol period in which these channels are sent. The eNB may send the PDCCH to groups of UEs in certain portions of the system bandwidth. The eNB may send the PDSCH to specific UEs in specific portions of the system bandwidth. The eNB may send the PSS, SSS, PBCH, PCFICH, and PHICH in a broadcast manner to all UEs, may send the PDCCH in a unicast manner to specific UEs, and may also send the PDSCH in a unicast manner to specific UEs.

A number of resource elements may be available in each symbol period. Each resource element (RE) may cover one subcarrier in one symbol period and may be used to send one modulation symbol, which may be a real or complex value. Resource elements not used for a reference signal in each symbol period may be arranged into resource element groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1, and 2. The PDCCH may occupy 9, 18, 36, or 72 REGs, which may be selected from the available REGs, in the first M symbol periods, for example. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. An eNB may send the PDCCH to the UE in any of the combinations that the UE will search.

As indicated above, Fig. 3 is provided as an example. Other examples are possible and may differ from what was described above in connection with Fig. 3.

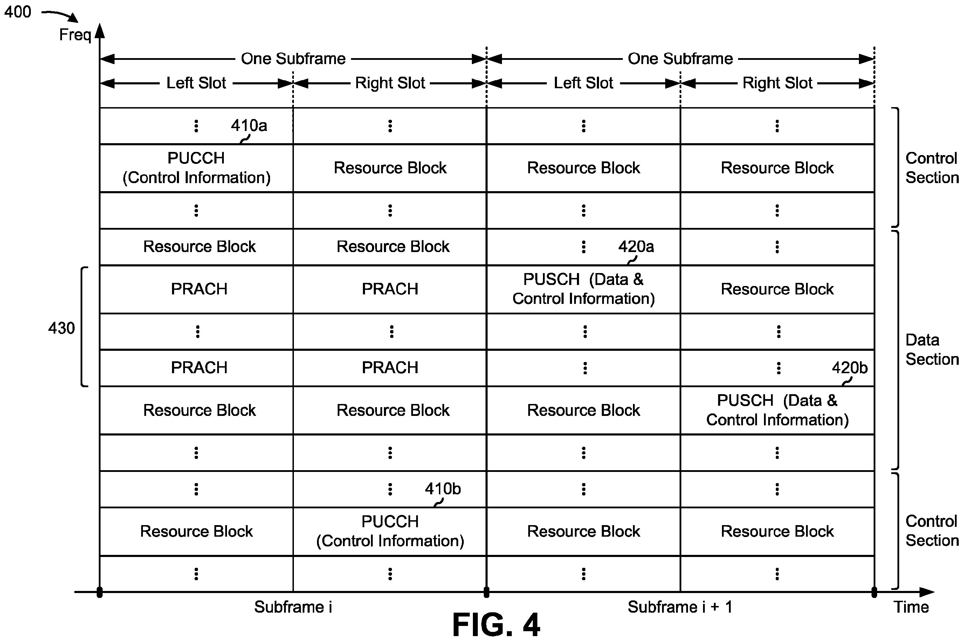

Fig. 4 is a diagram illustrating an example 400 of an uplink (UL) frame structure in LTE, in accordance with various aspects of the present disclosure. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequencies.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (e.g., of 1 ms) or in a sequence of few contiguous subframes and a UE can make only a single PRACH attempt per frame (e.g., of 10 ms).

As indicated above, Fig. 4 is provided as an example. Other examples are possible and may differ from what was described above in connection with Fig. 4.

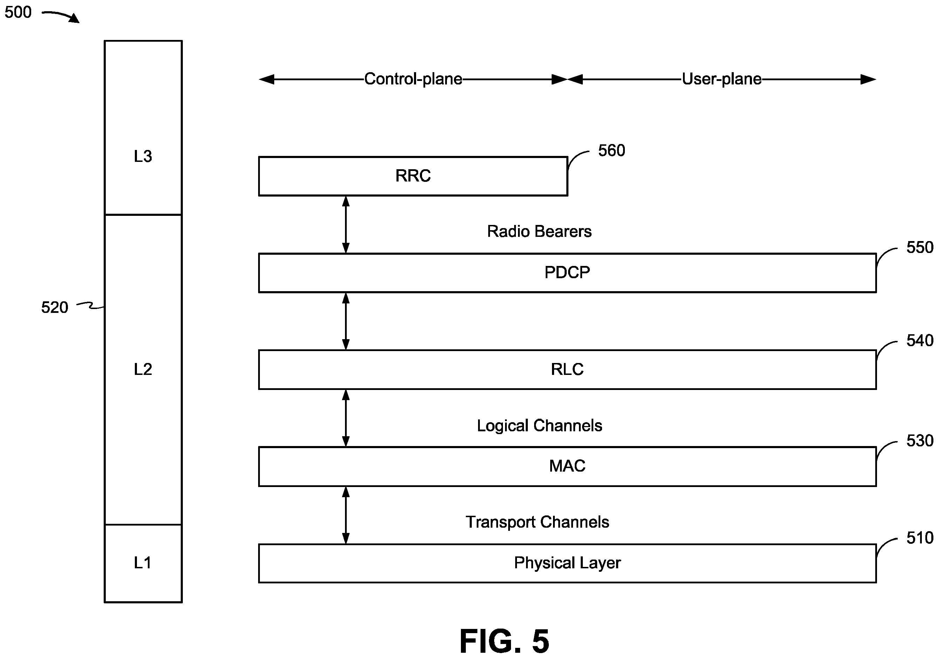

Fig. 5 is a diagram illustrating an example 500 of a radio protocol architecture for a user plane and a control plane in LTE, in accordance with various aspects of the present disclosure. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 510. Layer 2 (L2 layer) 520 is above the physical layer 510 and is responsible for the link between the UE and eNB over the physical layer 510.

In the user plane, the L2 layer 520 includes, for example, a media access control (MAC) sublayer 530, a radio link control (RLC) sublayer 540, and a packet data convergence protocol (PDCP) sublayer 550, which are terminated at the eNB on the network side. Although not shown, the UE may have several upper layers above the L2 layer 520 including a network layer (e.g., IP layer) that is terminated at a packet data network (PDN) gateway on the network side, and an application layer that is terminated at the other end of the connection (e.g., a far end UE, a server, and/or the like).

The PDCP sublayer 550 provides retransmission of lost data in handover. The PDCP sublayer 550 also provides header compression for upper layer data packets to reduce radio transmission overhead, security by ciphering the data packets, and handover support for UEs between eNBs. The RLC sublayer 540 provides segmentation and reassembly of upper layer data packets, retransmission of lost data packets, and reordering of data packets to compensate for out-of-order reception due to hybrid automatic repeat request (HARQ). The MAC sublayer 530 provides multiplexing between logical and transport channels. The MAC sublayer 530 is also responsible for allocating the various radio resources (e.g., resource blocks) in one cell among the UEs. The MAC sublayer 530 is also responsible for HARQ operations.

In the control plane, the radio protocol architecture for the UE and eNB is substantially the same for the physical layer 510 and the L2 layer 520 with the exception that there is no header compression function for the control plane. The control plane also includes a radio resource control (RRC) sublayer 560 in Layer 3 (L3 layer). The RRC sublayer 560 is responsible for obtaining radio resources (i.e., radio bearers) and for configuring the lower layers using RRC signaling between the eNB and the UE.

As indicated above, Fig. 5 is provided as an example. Other examples are possible and may differ from what was described above in connection with Fig. 5.

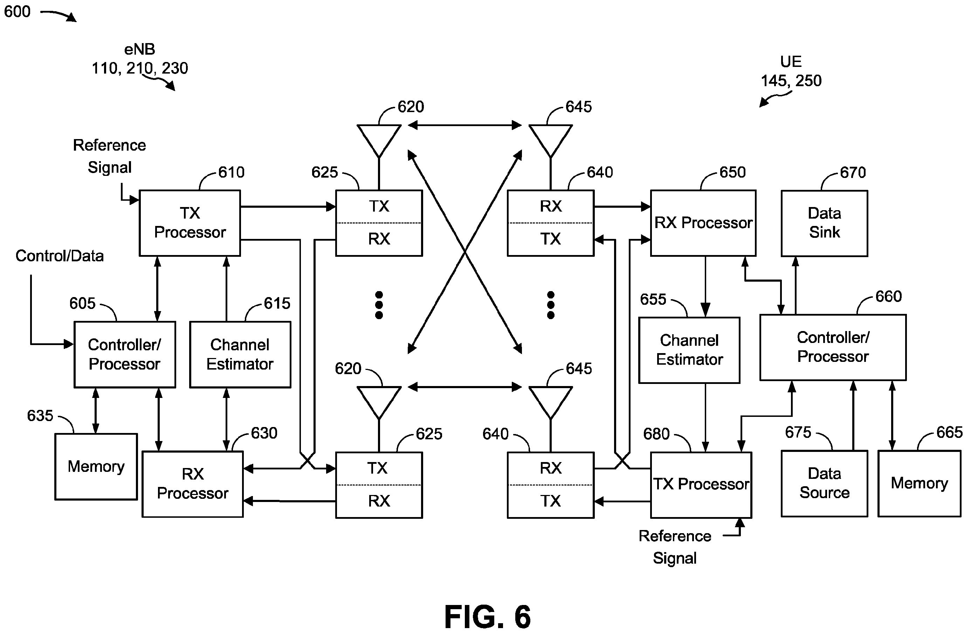

Fig. 6 is a diagram illustrating example components 600 of eNB 110, 210, 230 and UE 145, 250 in an access network, in accordance with various aspects of the present disclosure. As shown in Fig. 6, eNB 110, 210, 230 may include a controller/processor 605, a TX processor 610, a channel estimator 615, an antenna 620, a transmitter 625TX, a receiver 625RX, an RX processor 630, and a memory 635. As further shown in Fig. 6, UE 145, 250 may include a receiver RX, for example, of a transceiver TX/RX 640, a transmitter TX, for example, of a transceiver TX/RX 640, an antenna 645, an RX processor 650, a channel estimator 655, a controller/processor 660, a memory 665, a data sink 670, a data source 675, and a TX processor 680.

In the DL, upper layer packets from the core network are provided to controller/processor 605. The controller/processor 605 implements the functionality of the L2 layer. In the DL, the controller/processor 605 provides header compression, ciphering, packet segmentation and reordering, multiplexing between logical and transport channels, and radio resource allocations to the UE 145, 250 based, at least in part, on various priority metrics. The controller/processor 605 is also responsible for HARQ operations, retransmission of lost packets, and signaling to the UE 145, 250.

The TX processor 610 implements various signal processing functions for the L1 layer (e.g., physical layer). The signal processing functions includes coding and interleaving to facilitate forward error correction (FEC) at the UE 145, 250 and mapping to signal constellations based, at least in part, on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 615 may be used to determine the coding and modulation scheme, as well as for spatial processing. The channel estimate may be derived from a reference signal and/or channel condition feedback transmitted by the UE 145, 250. Each spatial stream is then provided to a different antenna 620 via a separate transmitter TX, for example, of transceiver TX/RX 625. Each such transmitter TX modulates an RF carrier with a respective spatial stream for transmission.

At the UE 145, 250, each receiver RX, for example, of a transceiver TX/RX 640 receives a signal through its respective antenna 645. Each such receiver RX recovers information modulated onto an RF carrier and provides the information to the receiver (RX) processor 650. The RX processor 650 implements various signal processing functions of the L1 layer. The RX processor 650 performs spatial processing on the information to recover any spatial streams destined for the UE 145, 250. If multiple spatial streams are destined for the UE 145, 250, the spatial streams may be combined by the RX processor 650 into a single OFDM symbol stream. The RX processor 650 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the eNB 110, 210, 230. These soft decisions may be based, at least in part, on channel estimates computed by the channel estimator 655. The soft decisions are then decoded and deinterleaved to recover the data and control signals that were originally transmitted by the eNB 110, 210, 230 on the physical channel. The data and control signals are then provided to the controller/processor 660.

The controller/processor 660 implements the L2 layer. The controller/processor 660 can be associated with a memory 665 that stores program codes and data. The memory 665 may include a non-transitory computer-readable medium. In the UL, the controller/processor 660 provides demultiplexing between transport and logical channels, packet reassembly, deciphering, header decompression, control signal processing to recover upper layer packets from the core network. The upper layer packets are then provided to a data sink 670, which represents all the protocol layers above the L2 layer. Various control signals may also be provided to the data sink 670 for L3 processing. The controller/processor 660 is also responsible for error detection using an acknowledgement (ACK) and/or negative acknowledgement (NACK) protocol to support HARQ operations.

In the UL, a data source 675 is used to provide upper layer packets to the controller/processor 660. The data source 675 represents all protocol layers above the L2 layer. Similar to the functionality described in connection with the DL transmission by the eNB 110, 210, 230, the controller/processor 660 implements the L2 layer for the user plane and the control plane by providing header compression, ciphering, packet segmentation and reordering, and multiplexing between logical and transport channels based, at least in part, on radio resource allocations by the eNB 110, 210, 230. The controller/processor 660 is also responsible for HARQ operations, retransmission of lost packets, and signaling to the eNB 110, 210, 230.

Channel estimates derived by a channel estimator 655 from a reference signal or feedback transmitted by the eNB 110, 210, 230 may be used by the TX processor 680 to select the appropriate coding and modulation schemes, and to facilitate spatial processing. The spatial streams generated by the TX processor 680 are provided to different antenna 645 via separate transmitters TX, for example, of transceivers TX/RX 640. Each transmitter TX, for example, of transceiver TX/RX 640 modulates an RF carrier with a respective spatial stream for transmission.

The UL transmission is processed at the eNB 110, 210, 230 in a manner similar to that described in connection with the receiver function at the UE 145, 250. Each receiver RX, for example, of transceiver TX/RX 625 receives a signal through its respective antenna 620. Each receiver RX, for example, of transceiver TX/RX 625 recovers information modulated onto an RF carrier and provides the information to a RX processor 630. The RX processor 630 may implement the L1 layer.

The controller/processor 605 implements the L2 layer. The controller/processor 605 can be associated with a memory 635 that stores program code and data. The memory 635 may be referred to as a computer-readable medium. In the UL, the control/processor 605 provides demultiplexing between transport and logical channels, packet reassembly, deciphering, header decompression, control signal processing to recover upper layer packets from the UE 145, 250. Upper layer packets from the controller/processor 605 may be provided to the core network. The controller/processor 605 is also responsible for error detection using an ACK and/or NACK protocol to support HARQ operations.

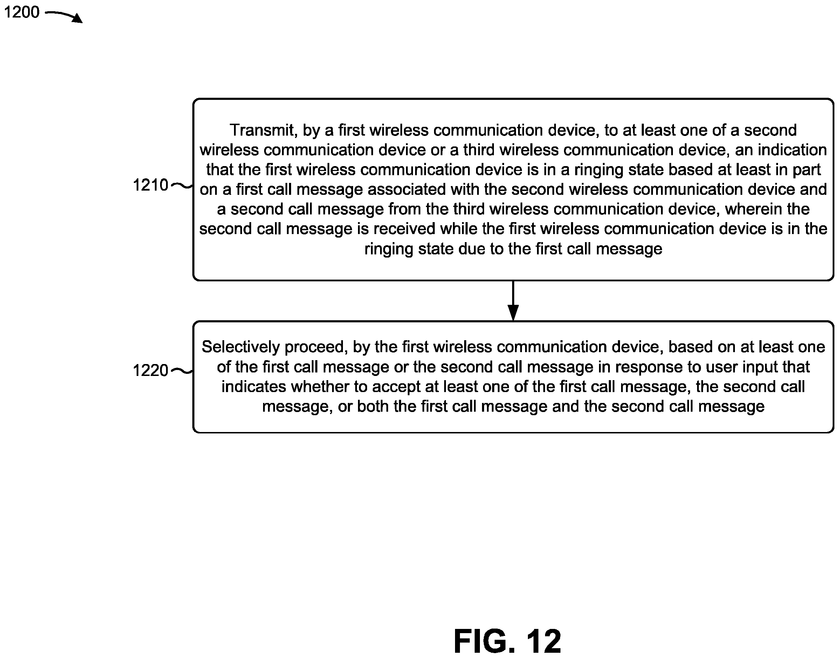

In some aspects, one or more components of UE 145, 250 may be included in a housing 145', as shown in Fig. 1. One or more components of UE 145, 250 may be configured to perform call handling during a UE ringing state, as described in more detail elsewhere herein. For example, the controller/processor 660 and/or other processors and modules of UE 145, 250 may perform or direct operations of, for example, process 1200 of Fig. 12 and/or other processes as described herein. In some aspects, one or more of the components shown in Fig. 6 may be employed to perform example process 1200 and/or other processes for the techniques described herein.

The number and arrangement of components shown in Fig. 6 are provided as an example. In practice, there may be additional components, fewer components, different components, or differently arranged components than those shown in Fig. 6. Furthermore, two or more components shown in Fig. 6 may be implemented within a single component, or a single component shown in Fig. 6 may be implemented as multiple, distributed components. Additionally, or alternatively, a set of components (e.g., one or more components) shown in Fig. 6 may perform one or more functions described as being performed by another set of components shown in Fig. 6.

When a first UE receives a call message (e.g., a session initiation protocol (SIP) INVITE message) from a second UE to initiate a call, or when the first UE sends a call message to the second UE to initiate a call, the first UE may enter a ringing state before the call message is accepted to start the call. If the first UE receives another call message from a third UE when the first UE is in the ringing state, the first UE may send a busy message to the third UE because the first UE is in the ringing state due to the call message associated with the second UE (e.g., the call message sent to or received from the second UE). In this case, the third UE may be unable to reach the first UE while the first UE in in the ringing state, even if there is an urgent need for the third UE to connect on a call with the first UE. Implementations described herein provide options for a user of the first UE to select a call with which to proceed when the first UE receives a call message and the first UE is already in a ringing state due to another call message sent by or received by the first UE, thereby improving a user experience.

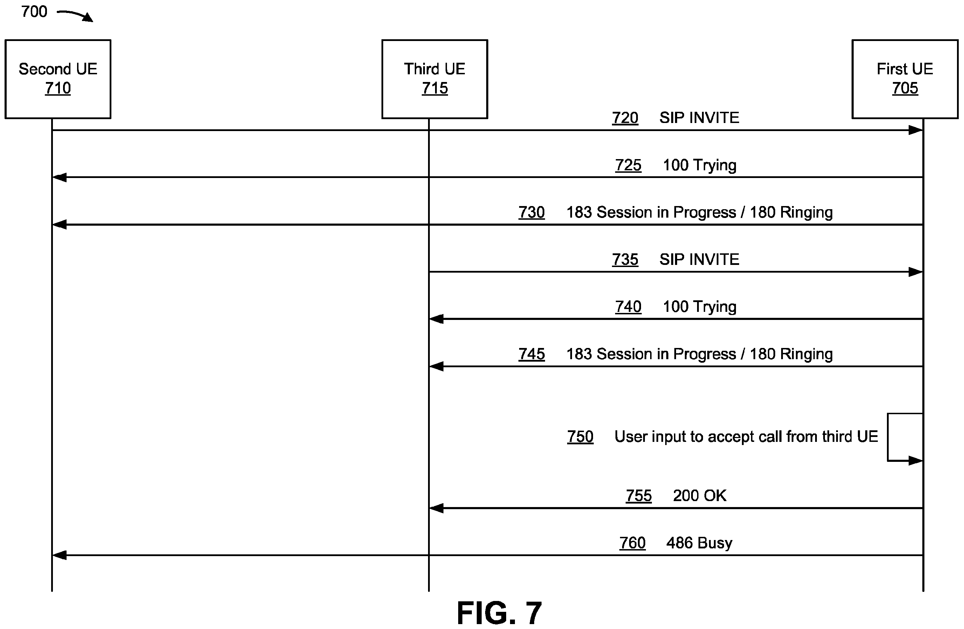

Fig. 7 is a diagram illustrating an example 700 of call handling during a user equipment ringing state, in accordance with various aspects of the present disclosure. In example 700 of Fig. 7, a first UE 705 acts as a mobile terminator for a first call message. In some aspects, the first UE 705 may act as a mobile originator for the first call message, as described in more detail elsewhere herein.

As shown in Fig. 7, the first UE 705 may receive the first call message from a second UE 710, and may receive a second call message from a third UE 715 while the first UE 705 is in a ringing state due to the first call message. The first UE 705 transmits, to the second UE 710 and the third UE 715, an indication that the first UE 705 is in a ringing state based at least in part on receiving the second call message while the first UE 705 is in the ringing state due to the first call message (e.g., rather than sending the indication of the ringing state to the second UE 710 and sending an indication of a busy state to the third UE 715). The first UE 705 selectively proceeds on at least one of the first call message and the second call message in response to user input that indicates whether to accept at least one of the first call message, the second call message, or both the first call message and the second call message. Additional details are described below. The first UE 705, the second UE 710, and/or the third UE 715 may correspond to one or more UEs described elsewhere herein, such as the UE 145 of Fig. 1 and/or the UE 250 of Fig. 2.

As shown by reference number 720, the first UE 705 may receive a first call message (e.g., a first call request) from the second UE 710. The first call message may include, for example, a SIP INVITE message to request a call with the first UE 705. In some aspects, a user of the second UE 710 may dial a mobile directory number (MDN) associated with the first UE 705, which may cause the first call message to be transmitted from the second UE 710 to the first UE 705.

In some aspects, the first UE 705 may perform a first quality of service resource reservation procedure based at least in part on receiving the first call message. For example, the first UE 705 may reserve local resources of the first UE 705 for the call, such as audio resources, multimedia resources, radiofrequency (RF) resources, and/or the like. Additionally, or alternatively, the first UE 705 may request network resources for the call, such as a radio bearer (e.g., by communicating with a base station). In this case, the first UE 705 may indicate a quality of service to be associated with the radio bearer (e.g., by transmitting quality of service information to the base station).

As shown by reference number 725, the first UE 705 may respond to the first call message by transmitting a provisional response message to the second UE 710. In some aspects, the provisional response message may include a 100 Trying message, as shown. The 100 Trying message may indicate that the SIP INVITE message has been received by the first UE 705, and that the first UE 705 is performing some unspecified action in association with the first call message, such as consulting a database for information associated with the first call message and/or the second UE 710. In some aspects, the first UE 705 may not transmit the 100 Trying message.

As shown by reference number 730, the first UE 705 transmits to the second UE 710, a response message that may includes a 183 Session in Progress message. The 183 Session in Progress message may be used to send information for a call that is being set up (e.g., while the first UE 705 is in the ringing state). For example, the 183 Session in Progress message may include session description protocol (SDP) media information (e.g., media packets that cause an audio message to be played on the second UE 710). In some aspects, the 183 Session in Progress message may include SDP media information to describe the audio packet to be played by the second UE 710.

Additionally, or alternatively, the first UE 705 may transmit, to the second UE 710, a response message that includes a 180 Ringing message. The 180 Ringing message may indicate that the first UE 705 received the first call message from the second UE 710, and is alerting a user of receipt of the call message (e.g., by ringing). For example, the first UE 705 may enter a ringing state based at least in part on receiving the first call message, and may ring while in the ringing state. As used herein, ring or ringing may refer to any mechanism used to alert a user of an incoming call, such as ringing, playing a ring tone, outputting an audible alert, vibrating, displaying information on a display, ringing silently (e.g., when in a silent mode), and/or the like. In some aspects, the 180 Ringing message may include a ringing tone to be output (e.g., played) by the second UE 710.

As shown by reference number 735, the first UE 705 may receive a second call message from the third UE 715 while the first UE 705 is in the ringing state due to the first call message from the second UE 710. The second call message may include, for example, a SIP INVITE message to request a call with the first UE 705. In some aspects, a user of the third UE 715 may dial an MDN associated with the first UE 705, which may cause the second call message to be transmitted from the third UE 715 to the first UE 705.

In some aspects, the first UE 705 may perform a second quality of service resource reservation procedure based at least in part on receiving the second call message, in a similar manner as described above in connection with reference number 720. In this way, the first UE 705 may reserve resources for both the first call message and the second call message, thereby reducing call setup time after receiving user input that indicates whether to proceed with the first call message and/or the second call message.

As shown by reference number 740, the first UE 705 may respond to the second call message by transmitting a provisional response message to the third UE 715. In some aspects, the provisional response message may include a 100 Trying message, as described above in connection with reference number 725. In some aspects, the first UE 705 may not transmit the 100 Trying message.

As shown by reference number 745, the first UE 705 transmits to the third UE 715, one or more response messages, such as a 180 Ringing message and/or a 183 Session in Progress message, in a similar manner as described above in connection with reference number 730. Thus, the first UE 705 transmits to the second UE 710 and the third UE 715 (e.g., at different times during a ringing state of the first UE 705), an indication that the first UE 705 is in a ringing state. The first UE 705 may transmit this indication based at least in part on receiving the first call message from the second UE 710 and receiving the second call message from the third UE 715 while the first UE 705 is in the ringing state due to the first call message. In this way, the first UE 705 may alert a user of the third UE 715 that the first UE 705 has received the second call message and is alerting a user of receipt of the second call message, rather than sending a 486 Busy message to the third UE 715 and being unreachable by or to the third UE 715 while in the ringing state due to the first call message. As a result, the first UE 705 may have increased availability.

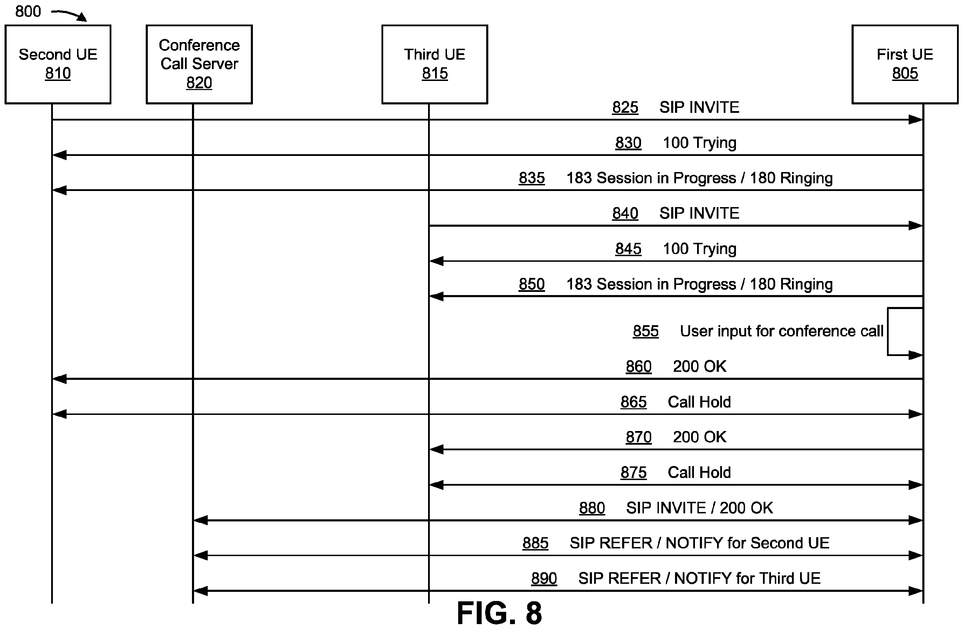

Then, the first UE 705 receives user input that indicates whether to accept at least one of the first call message or the second call message (or to accept both the first call message and the second call message on a conference call, as described in more detail below in connection with Fig. 8). The user input may include, for example, an interaction with a display of the first UE 705, an interaction with a keyboard or keypad of the first UE 705, voice input, and/or the like. The user input may be used to select an option to answer the call from the second UE 710, to answer the call from the third UE 715, and/or to join the second UE 710 and the third UE 715 in a conference call.

In some aspects, the first UE 705 may output first information associated with the first call message and/or the second UE 710, and may output second information associated with the second call message and/or the third UE 715. For example, the first UE 705 may obtain first contact information (e.g., an MDN, a contact name, a contact picture, a contact ring tone, and/or the like) associated with the second UE 710, and may obtain second contact information associated with the third UE 715. In some aspects, the first UE 705 may output the first contact information and/or the second contact information (e.g., via a display, a speaker, and/or the like).

Additionally, or alternatively, the first UE 705 may provide a first option to respond to (e.g., to answer, accept, reject, place on hold, let ring, and/or the like) the first call message and a second option to respond to the second call message. A user of the first UE 705 may provide user input to select the first option and/or the second option. For example, the user may select the first contact information and/or the second contact information, which may cause the first UE 705 to accept the call from the second UE 710 and/or the third UE 715. In some aspects, the first UE 705 may provide information that indicates an order in which the call messages were received. For example, the first UE 705 may output an indication that the second call message from the third UE 715 was received after the first call message from the second UE 710.

Additionally, or alternatively, the first UE 705 may provide a first option to respond to the first call message, a second option to respond to the second call message, and a third option to join the first UE 705, the second UE 710, and the third UE 715 on a conference call, as described in more detail below in connection with Fig. 8.

As shown by reference number 750, the user may provide input to accept the call from the third UE 715. In this case, as shown by reference number 755, the first UE 705 may transmit a successful response message, such as a 200 OK message, to the third UE 715 to proceed with the call from the third UE 715. Furthermore, as shown by reference number 760, the first UE 705 may transmit a client failure response message, such as a 486 Busy message, to the second UE 710 to indicate that the first UE 705 is busy (e.g., because the first UE 705 has accepted the call with the third UE 715).

While shown as providing input to accept the call from the third UE 715, in some aspects, the user may provide input to accept the call from the second UE 710. In this case, the first UE 705 may transmit a successful response message, such as a 200 OK message, to the second UE 710 to proceed with the call from the second UE 710 and/or may transmit a client failure response message, such as a 486 Busy message, to the third UE 715 to indicate that the first UE 705 is busy (e.g., because the first UE 705 has accepted the call with the second UE 710).

Thus, the first UE 705 may associate one of the first call message or the second call message with an answered call request, and may associate the other of the first call message or the second call message with an unanswered call request. In example 700 of Fig. 7, the second call message from the third UE 715 is the answered call request, and the first call message from the second UE 710 is the unanswered call request. In some aspects, the first UE 705 may allocate one or more call resources (e.g., local resources, quality of service resources, and/or the like) for the answered call request. Additionally, or alternatively, the first UE 705 may provide a busy message for the unanswered call request (e.g., a 486 Busy message). In this way, the first UE 705 may notify a user of an incoming call message (e.g., an incoming call request) while the first UE 705 is in a ringing state due to another received call message, and may proceed with a call selected by the user. This improves a user experience, increases the availability of the first UE 705, and may conserve network resources that might otherwise be used to send multiple busy messages for back-to-back calls.

While shown as providing an indication of the ringing state to two UEs (e.g., the second UE 710 and the third UE 715), the first UE 705 may provide the indication of the ringing state to more than two UEs (e.g., when multiple call messages are received by the first UE 705 when the first UE 705 is in the ringing state). In this case, the first UE 705 may handle the call message from additional UEs in a similar manner as described above.

As indicated above, Fig. 7 is provided as an example. Other examples are possible and may differ from what was described in connection with Fig. 7.

Fig. 8 is a diagram illustrating another example 800 of call handling during a user equipment ringing state, in accordance with various aspects of the present disclosure. In example 800 of Fig. 8, a first UE 805 acts as a mobile terminator for a first call message. In some aspects, the first UE 805 may act as a mobile originator for the first call message, as described in more detail elsewhere herein.

As shown in Fig. 8, the first UE 805 may receive the first call message from a second UE 810, and may receive a second call message from a third UE 815 while the first UE 805 is in a ringing state due to the first call message. The first UE 805 may transmit, to the second UE 810 and the third UE 815, an indication that the first UE 805 is in a ringing state based at least in part on receiving the second call message while the first UE 805 is in the ringing state due to the first call message. The first UE 805 may selectively proceed based on at least one of the first call message or the second call message in response to user input that indicates whether to accept at least one of the first call message, the second call message, or both the first call message and the second call message.

Fig. 8 shows an example where the first UE 805 proceeds based at least in part on the first call message and the second call message in response to user input that indicates to accept both the first call message and the second call message (e.g., on a conference call). The first UE 805, the second UE 810, and/or the third UE 815 may correspond to one or more UEs described elsewhere herein, such as the UE 145 of Fig. 1 and/or the UE 250 of Fig. 2. One or more of the first UE 805, the second UE 810, and/or the third UE 815 may communicate with a conference call server 820 for the conference call. The conference call server 820 may correspond to the conference call server 150 of Fig. 1.

As shown by reference number 825, the first UE 805 may receive a first call message (e.g., a first call request, a first SIP INVITE message, and/or the like) from the second UE 810, as described above in connection with Fig. 7. In some aspects, the first UE 805 may perform a first quality of service resource reservation procedure based at least in part on receiving the first call message, as described above in connection with Fig. 7.

As shown by reference number 830, the first UE 805 may respond to the first call message by transmitting a provisional response message to the second UE 810, such as a 100 Trying message, as described above in connection with Fig. 7.

As shown by reference number 835, the first UE 805 may transmit, to the second UE 810, one or more response messages, such as a 180 Ringing message and/or a 183 Session in Progress message, as described above in connection with Fig. 7. Additionally, or alternatively, the first UE 805 may enter a ringing state based at least in part on receiving the first call message, as described above in connection with Fig. 7.

As shown by reference number 840, the first UE 805 may receive a second call message (e.g., a second call request, a second SIP INVITE message, and/or the like) from the third UE 815 while the first UE 805 is in the ringing state due to the first call message from the second UE 810, as described above in connection with Fig. 7. In some aspects, the first UE 805 may perform a second quality of service resource reservation procedure based at least in part on receiving the second call message, as described above in connection with Fig. 7.

As shown by reference number 845, the first UE 805 may respond to the second call message by transmitting a provisional response message to the third UE 815, such as a 100 Trying message, as described above in connection with Fig. 7.

As shown by reference number 850, the first UE 805 may transmit, to the third UE 815, one or more response messages, such as a 180 Ringing message and/or a 183 Session in Progress message, as described above in connection with Fig. 7. Thus, the first UE 805 may transmit, to the second UE 810 and the third UE 815 (e.g., at different times during a ringing state of the first UE 805), an indication that the first UE 705 is in a ringing state. The first UE 805 may transmit this indication based at least in part on receiving the first call message from the second UE 810 and receiving the second call message from the third UE 815 while the first UE 805 is in the ringing state due to the first call message. In this way, the first UE 805 may alert a user of the third UE 815 that the first UE 805 has received the second call message and is alerting a user of receipt of the second call message, rather than sending a 486 Busy message to the third UE 815 and being unreachable by the third UE 815 while in the ringing state due to the first call message. As a result, the first UE 805 may have increased availability.

In some aspects, the first UE 805 may receive user input that indicates whether to accept only the first call message, only the second call message, or both the first call message and the second call message on a conference call. The user input may include, for example, an interaction with a display of the first UE 805, an interaction with a keyboard or keypad of the first UE 805, voice input, and/or the like. The user input may be used to select an option to answer the call from the second UE 810, to answer the call from the third UE 815, and/or to join the second UE 810 and the third UE 815 in a conference call with the first UE 805.

In some aspects, the first UE 805 may output first information associated with the first call message and/or the second UE 810, and may output second information associated with the second call message and/or the third UE 815, as described above in connection with Fig. 7. Additionally, or alternatively, the first UE 805 may provide a first option to respond to (e.g., to answer, accept, reject, place on hold, let ring, and/or the like) the first call message, a second option to respond to the second call message, and a third option to join the first UE 805, the second UE 810, and the third UE 815 on a conference call.

As shown by reference number 855, the user may provide input to join the first UE 805, the second UE 810, and the third UE 815 on a conference call. In this case, as shown by reference number 860, the first UE 805 may transmit a successful response message, such as a 200 OK message, to the second UE 810 to proceed to join the second UE 810 on the conference call. As shown by reference number 865, the first UE 805 may place the call between the first UE 805 and the second UE 810 on hold to proceed with the conference call. Similarly, as shown by reference number 870, the first UE 805 may transmit a successful response message, such as a 200 OK message, to the third UE 815 to proceed to join the third UE 815 on the conference call. As shown by reference number 875, the first UE 805 may place the call between the first UE 805 and the third UE 815 on hold to proceed with the conference call. Additionally, or alternatively, the first UE 805 may allocate one or more call resources for the conference call, and may transmit one or more messages to the conference call server 820, to establish the conference call, when the user input includes a selection of an option indicating that the first call message and the second call message are to be joined in the conference call

For example, as shown by reference number 880, the first UE 805 may transmit a third call message (e.g., a third call request, a third SIP INVITE message, and/or the like) to a conference call server 820. The call message may be used to set up a call between the first UE 805 and the conference call server 820. The first UE 805 may receive, from the conference call server 820, a successful response message, such as a 200 OK message indicating that the call between the first UE 805 and the conference call server 820 has been established.

As shown by reference number 885, the first UE 805 may transmit a first SIP REFER message to the conference call server 820 to join the second UE 810 on the call between the first UE 805 and the conference call server 820. For example, the first SIP REFER message may identify the second UE 810, and may be used to transfer the on hold call between the first UE 805 and the second UE 810 to the conference call server 820. The first UE 805 may receive, from the conference call server 820, a SIP NOTIFY message that notifies the first UE 805 of a successful call transfer.

As shown by reference number 890, the first UE 805 may transmit a second SIP REFER message to the conference call server 820 to join the third UE 815 on the call among the first UE 805, the second UE 810, and the conference call server 820. For example, the second SIP REFER message may identify the third UE 815, and may be used to transfer the on hold call between the first UE 805 and the third UE 815 to the conference call server 820. The first UE 805 may receive, from the conference call server 820, a SIP NOTIFY message that notifies the first UE 805 of a successful call transfer.

While shown as answering the call from the second UE 810 before answering the call from the third UE 815, in some aspects, the first UE 805 may answer the call from the third UE 815 before answering the call from the second UE 810. Similarly, while shown as transferring the call with the second UE 810 before transferring the call with the third UE 815, in some aspects, the first UE 805 may transfer the call with the third UE 815 before transferring the call with the second UE 810.

In this way, the first UE 805 may notify a user of an incoming call message (e.g., an incoming call request) while the first UE 805 is in a ringing state due to another received call message, and may proceed with a conference call based at least in part on user input. This improves a user experience, increases the availability of the first UE 805, and may conserve network resources that might otherwise be used to send multiple busy messages for back-to-back calls.

While shown as providing an indication of the ringing state to two UEs (e.g., the second UE 810 and the third UE 815) and joining the two UEs in a conference call, the first UE 805 may provide the indication of the ringing state to more than two UEs (e.g., when multiple call messages are received by the first UE 805 when the first UE 805 is in the ringing state), and may join more than two UEs in the conference call. In this case, the first UE 805 may handle the call message from additional UEs and may join the additional UEs in the conference call in a similar manner as described above.

As indicated above, Fig. 8 is provided as an example. Other examples are possible and may differ from what was described in connection with Fig. 8.

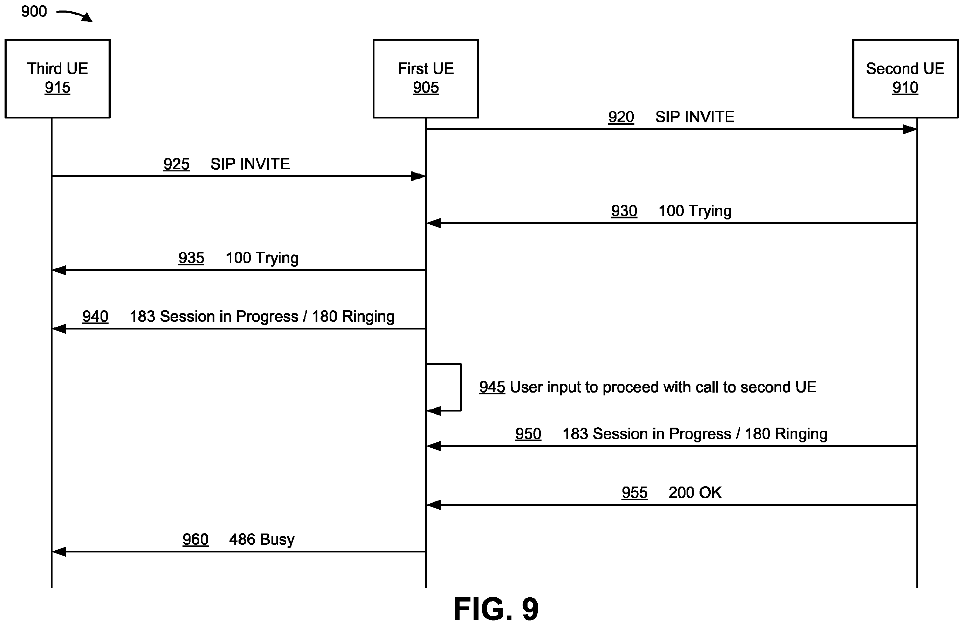

Fig. 9 is a diagram illustrating another example 900 of call handling during a user equipment ringing state, in accordance with various aspects of the present disclosure. In example 900 of Fig. 9, a first UE 905 acts as a mobile originator for a first call message. In some aspects, the first UE 905 may act as a mobile terminator for the first call message, as described in more detail elsewhere herein.

As shown in Fig. 9, the first UE 905 may send the first call message to a second UE 910, and may receive a second call message from a third UE 915 while the first UE 905 is in a ringing state due to the first call message. The first UE 905 may transmit, to the third UE 915, an indication that the first UE 905 is in a ringing state based at least in part on receiving the second call message while the first UE 905 is in the ringing state due to the first call message (e.g., rather than sending an indication of a busy state to the third UE 915). The first UE 905 may selectively proceed based on at least one of the first call message or the second call message in response to user input that indicates whether to proceed with at least one of the first call message, the second call message, or both the first call message and the second call message. Additional details are described below. The first UE 905, the second UE 910, and/or the third UE 915 may correspond to one or more UEs described elsewhere herein, such as the UE 145 of Fig. 1 and/or the UE 250 of Fig. 2.

As shown by reference number 920, the first UE 905 may send a first call message (e.g., a first call request) to the second UE 910. The first call message may include, for example, a SIP INVITE message to request a call with the second UE 910.

In some aspects, the first UE 905 may perform a first quality of service resource reservation procedure based at least in part on sending the first call message. For example, the first UE 905 may reserve local resources of the first UE 905 for the call, such as audio resources, multimedia resources, RF resources, and/or the like. Additionally, or alternatively, the first UE 905 may request network resources for the call, such as a radio bearer (e.g., by communicating with a base station). In this case, the first UE 905 may indicate a quality of service to be associated with the radio bearer (e.g., by transmitting quality of service information to the base station).

As shown by reference number 925, the first UE 905 may receive a second call message from the third UE 915 while the first UE 905 is in the ringing state due to the first call message sent to the second UE 910 (e.g., after sending the SIP INVITE message to the second UE 910 and before a call with the second UE 910 is connected). The second call message may include, for example, a SIP INVITE message to request a call with the first UE 905.

In some aspects, the first UE 905 may perform a second quality of service resource reservation procedure based at least in part on receiving the second call message, in a similar manner as described above in connection with reference number 920. In this way, the first UE 905 may reserve resources for both the first call message and the second call message, thereby reducing call setup time after receiving user input that indicates whether to proceed with the first call message and/or the second call message.

As shown by reference number 930, the first UE 905 may receive a provisional response message from the second UE 910 in response to the first call message. In some aspects, the provisional response message may include a 100 Trying message, as described elsewhere herein. In some aspects, the second UE 910 may not transmit the 100 Trying message.

As shown by reference number 935, the first UE 905 may respond to the second call message by transmitting a provisional response message to the third UE 915. In some aspects, the provisional response message may include a 100 Trying message, as described elsewhere herein. In some aspects, the first UE 905 may not transmit the 100 Trying message.

As shown by reference number 940, the first UE 905 may transmit, to the third UE 915, a response message that includes a 183 Session in Progress message and/or a 180 Ringing message, as described elsewhere herein.

In some aspects, a user of the second UE 910 may not answer the call from the first UE 905 (e.g., associated with the first call message) before the first UE 905 transmits the response message to the third UE 915. Additionally, or alternatively, the first UE 905 may not receive an indication (e.g., a 200 OK message, a SIP CANCEL message, and/or the like) that the call, associated with the first call message, has been answered by the second UE 910 before the first UE 905 transmits the response message to the third UE 915. In either case, the first UE 905 may output first information associated with the first call message and/or second information associated with the second call message, and/or may receive user input that indicates whether to proceed with at least one of the first call message or the second call message (or to accept both the first call message and the second call message on a conference call, as described in more detail elsewhere herein).

As shown by reference number 945, the user may provide input to proceed with the call to the second UE 910. In this case, the first UE 905 may proceed with the call to the second UE 910, and may send a busy message to the third UE 915. For example, as shown by reference number 950, the first UE 905 may receive, from the second UE 910, one or more response messages to the first call message, such as a 180 Ringing message and/or a 183 Session in Progress message. Additionally, or alternatively, as shown by reference number 955, the first UE 905 may receive a successful response message, such as a 200 OK message, from the second UE 910 to proceed with the first call message associated with the second UE 910. Furthermore, as shown by reference number 960, the first UE 905 may transmit a client failure response message, such as a 486 Busy message, to the third UE 915 to indicate that the first UE 905 is busy (e.g., because the first UE 905 has proceeded with the call with the second UE 910).

Thus, the first UE 905 may transmit, to the third UE 915, an indication that the first UE 905 is in a ringing state (e.g., due to a first call message sent from the first UE 905 to the second UE 910). The first UE 905 may transmit this indication based at least in part on sending the first call message to the second UE 910 and receiving the second call message from the third UE 915 while the first UE 905 is in the ringing state due to the first call message. In this way, the first UE 905 may alert a user of the third UE 915 that the first UE 905 has received the second call message and is alerting a user of receipt of the second call message, rather than being unreachable by the third UE 915 while in the ringing state due to the first call message. As a result, the first UE 905 may have increased availability (e.g., rather than always sending a 486 Busy message to the third UE 915 in response to the second call message).

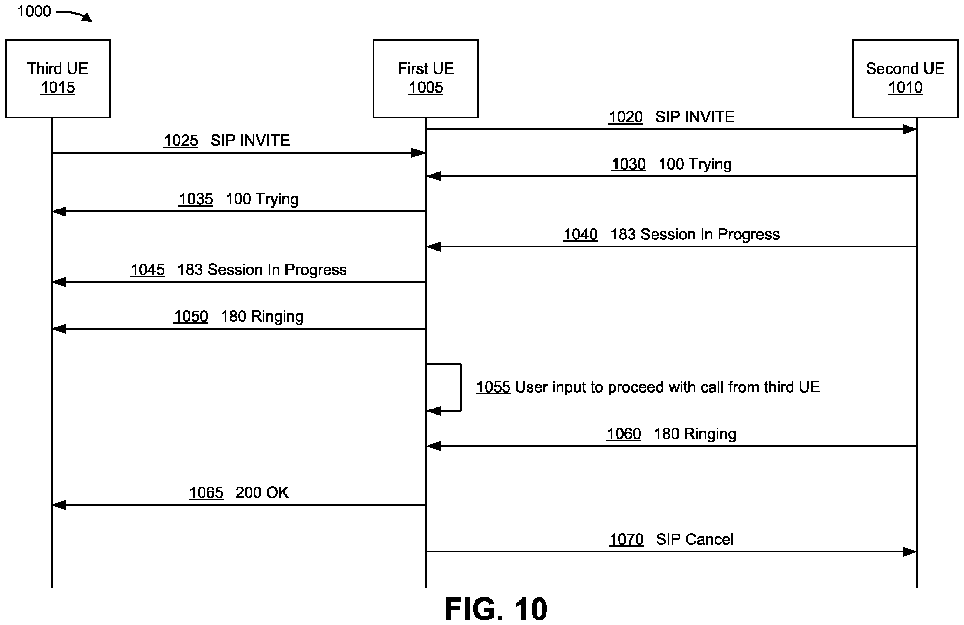

While shown as providing input to proceed with the call to the second UE 910, in some aspects, the user of the first UE 905 may provide input to proceed with the call from the third UE 915, as described below in connection with Fig. 10, and/or may provide input to join the first UE 905, the second UE 910, and the third UE 915 on a conference call, in a similar manner as described above in connection with Fig. 8.

As indicated above, Fig. 9 is provided as an example. Other examples are possible and may differ from what was described in connection with Fig. 9.

Fig. 10 is a diagram illustrating another example 1000 of call handling during a user equipment ringing state, in accordance with various aspects of the present disclosure. In example 1000 of Fig. 10, a first UE 1005 acts as a mobile originator for a first call message. In some aspects, the first UE 1005 may act as a mobile terminator for the first call message, as described in more detail elsewhere herein.

As shown in Fig. 10, the first UE 1005 may send the first call message to a second UE 1010, and may receive a second call message from a third UE 1015 while the first UE 1005 is in a ringing state due to the first call message. The first UE 1005 may transmit, to the third UE 1015, an indication that the first UE 1005 is in a ringing state based at least in part on receiving the second call message while the first UE 1005 is in the ringing state due to the first call message (e.g., rather than sending an indication of a busy state to the third UE 1015). The first UE 1005 may selectively proceed based on at least one of the first call message or the second call message in response to user input that indicates whether to proceed with at least one of the first call message, the second call message, or both the first call message and the second call message. Additional details are described below. The first UE 1005, the second UE 1010, and/or the third UE 1015 may correspond to one or more UEs described elsewhere herein, such as the UE 145 of Fig. 1 and/or the UE 250 of Fig. 2.

As shown by reference number 1020, the first UE 1005 may send a first call message (e.g., a first call request) to the second UE 1010. The first call message may include, for example, a SIP INVITE message to request a call with the second UE 1010. In some aspects, the first UE 1005 may perform a first quality of service resource reservation procedure based at least in part on sending the first call message and/or may request network resources for the call, as described in more detail elsewhere herein.

As shown by reference number 1025, the first UE 1005 may receive a second call message from the third UE 1015 while the first UE 1005 is in the ringing state due to the first call message sent to the second UE 1010 (e.g., after sending the SIP INVITE message to the second UE 1010 and before a call with the second UE 1010 is connected). The second call message may include, for example, a SIP INVITE message to request a call with the first UE 1005. In some aspects, the first UE 1005 may perform a second quality of service resource reservation procedure based at least in part on receiving the second call message, in a similar manner as described above in connection with reference number 1020. In this way, the first UE 1005 may reserve resources for both the first call message and the second call message, thereby reducing call setup time after receiving user input that indicates whether to proceed with the first call message and/or the second call message.

As shown by reference number 1030, the first UE 1005 may receive a provisional response message from the second UE 1010 in response to the first call message. In some aspects, the provisional response message may include a 100 Trying message, as described elsewhere herein. In some aspects, the second UE 1010 may not transmit the 100 Trying message.

As shown by reference number 1035, the first UE 1005 may respond to the second call message by transmitting a provisional response message to the third UE 1015. In some aspects, the provisional response message may include a 100 Trying message, as described elsewhere herein. In some aspects, the first UE 1005 may not transmit the 100 Trying message.

As shown by reference number 1040, the first UE 1005 may receive, from the second UE 1010, a response message that includes a 183 Session in Progress message, as described elsewhere herein. As shown by reference number 1045, the first UE 1005 may transmit, to the third UE 1015, a response message that includes a 183 Session in Progress message, as described elsewhere herein.

Additionally, or alternatively, and as shown by reference number 1050, the first UE 1005 may transmit, to the third UE 1015, a response message that includes a 180 Ringing message, as described elsewhere herein. In some aspects, the first UE 1005 may transmit the 180 Ringing message to the third UE 1015 (e.g., in response to the second call message) before receiving a 180 Ringing message from the second UE 1010 (e.g., in response to the first call message). In this case, the first UE 1005 may output first information associated with the first call message and/or second information associated with the second call message, and/or may receive user input that indicates whether to proceed with at least one of the first call message or the second call message (or to accept both the first call message and the second call message on a conference call, as described in more detail elsewhere herein).

As shown by reference number 1055, the user may provide input to proceed with the call from the third UE 1015. In this case, the first UE 1005 may proceed with the call from the third UE 1015, and may cancel proceeding with the call to the second UE 1010. For example, as shown by reference number 1060, the first UE 1005 may receive, from the second UE 1010, one or more response messages to the first call message, such as a 180 Ringing message and/or a 183 Session in Progress message, after sending one or more response messages to the second call message, such as a 180 Ringing message and/or a 183 Session in Progress message, to the third UE 1015. As shown by reference number 1065, the first UE 1005 may transmit a successful response message, such as a 200 OK message, to the third UE 1015 to proceed with the second call message associated with the third UE 1015. Furthermore, as shown by reference number 1070, the first UE 1005 may cancel proceeding with the first call message, such as by transmitting a SIP CANCEL message to the second UE 1010. Although the first UE 1005 is shown as receiving the 180 Ringing message from the second UE 1010 before transmitting the 200 OK message to the third UE 1015, in some aspects, the first UE 1005 may transmit the 200 OK message to the third UE 1015 before receiving the 180 Ringing message from the second UE 1010.

Thus, the first UE 1005 may transmit, to the third UE 1015, an indication that the first UE 1005 is in a ringing state (e.g., due to a first call message sent from the first UE 1005 to the second UE 1010). The first UE 1005 may transmit this indication based at least in part on sending the first call message to the second UE 1010 and receiving the second call message from the third UE 1015 while the first UE 1005 is in the ringing state due to the first call message. In this way, the first UE 1005 may alert a user of the third UE 1015 that the first UE 1005 has received the second call message and is alerting a user of receipt of the second call message, rather than being unreachable by the third UE 1015 while in the ringing state due to the first call message. As a result, the first UE 1005 may have increased availability (e.g., rather than always sending a 486 Busy message to the third UE 1015 in response to the second call message).

While shown as providing input to proceed with the call from the third UE 1015, in some aspects, the user of the first UE 1005 may provide input to proceed with the call to the second UE 1010, as described above in connection with Fig. 9, and/or may provide input to join the first UE 1005, the second UE 1010, and the third UE 1015 on a conference call, in a similar manner as described above in connection with Fig. 8.

As indicated above, Fig. 10 is provided as an example. Other examples are possible and may differ from what was described in connection with Fig. 10.

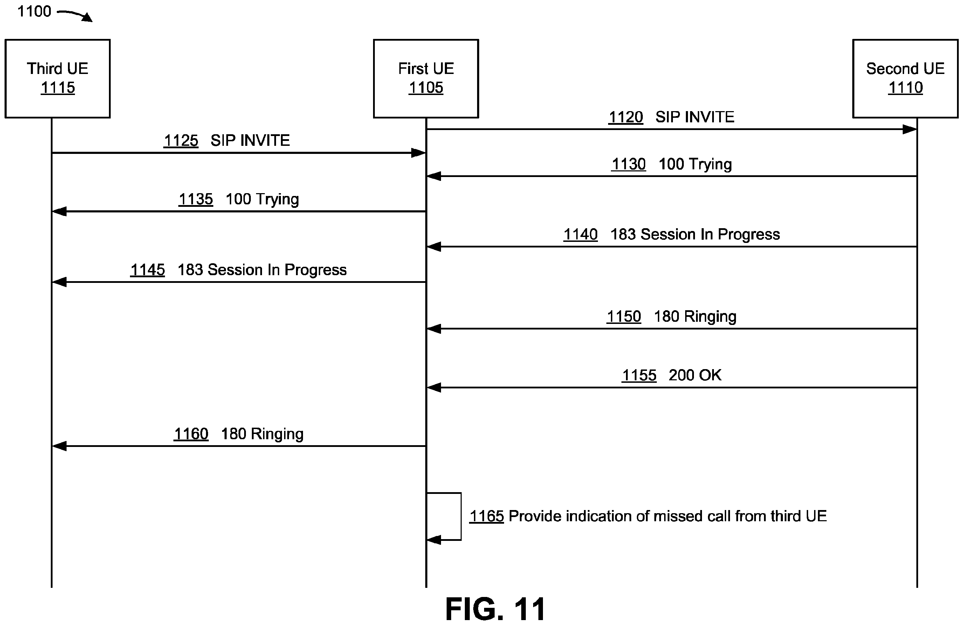

Fig. 11 is a diagram illustrating another example 1100 of call handling during a user equipment ringing state, in accordance with various aspects of the present disclosure. In example 1100 of Fig. 11, a first UE 1105 acts as a mobile originator for a first call message. In some aspects, the first UE 1105 may act as a mobile terminator for the first call message, as described in more detail elsewhere herein.

As shown in Fig. 11, the first UE 1105 may send the first call message to a second UE 1110, and may receive a second call message from a third UE 1115 while the first UE 1105 is in a ringing state due to the first call message. The first UE 1105 may transmit, to the third UE 1115, an indication that the first UE 1105 is in a ringing state based at least in part on receiving the second call message while the first UE 1105 is in the ringing state due to the first call message (e.g., rather than sending an indication of a busy state to the third UE 1115). The first UE 1105 may selectively proceed based on at least one of the first call message or the second call message in response to user input that indicates whether to proceed with at least one of the first call message, the second call message, or both the first call message and the second call message. Additional details are described below. The first UE 1105, the second UE 1110, and/or the third UE 1115 may correspond to one or more UEs described elsewhere herein, such as the UE 145 of Fig. 1 and/or the UE 250 of Fig. 2.

As shown by reference number 1120, the first UE 1105 may send a first call message (e.g., a first call request) to the second UE 1110. The first call message may include, for example, a SIP INVITE message to request a call with the second UE 1110. In some aspects, the first UE 1105 may perform a first quality of service resource reservation procedure based at least in part on sending the first call message and/or may request network resources for the call, as described in more detail elsewhere herein.

As shown by reference number 1125, the first UE 1105 may receive a second call message from the third UE 1115 while the first UE 1105 is in the ringing state due to the first call message sent to the second UE 1010 (e.g., after sending the SIP INVITE message to the second UE 1110 and before a call with the second UE 1110 is connected). The second call message may include, for example, a SIP INVITE message to request a call with the first UE 1105. In some aspects, the first UE 1105 may perform a second quality of service resource reservation procedure based at least in part on receiving the second call message, in a similar manner as described above in connection with reference number 1120. In this way, the first UE 1105 may reserve resources for both the first call message and the second call message, thereby reducing call setup time after receiving user input that indicates whether to proceed with the first call message and/or the second call message.

As shown by reference number 1130, the first UE 1105 may receive a provisional response message from the second UE 1110 in response to the first call message. In some aspects, the provisional response message may include a 100 Trying message, as described elsewhere herein. In some aspects, the second UE 1110 may not transmit the 100 Trying message.

As shown by reference number 1135, the first UE 1105 may respond to the second call message by transmitting a provisional response message to the third UE 1115. In some aspects, the provisional response message may include a 100 Trying message, as described elsewhere herein. In some aspects, the first UE 1105 may not transmit the 100 Trying message.

As shown by reference number 1140, the first UE 1105 may receive, from the second UE 1110, a response message that includes a 183 Session in Progress message, as described elsewhere herein. As shown by reference number 1145, the first UE 1105 may transmit, to the third UE 1115, a response message that includes a 183 Session in Progress message, as described elsewhere herein.

Additionally, or alternatively, as shown by reference number 1150, the first UE 1105 may receive, from the second UE 1110, a response message that includes a 180 Ringing message, as described elsewhere herein. In some aspects, the first UE 1105 may receive the 180 Ringing message from the second UE 1110 (e.g., in response to the first call message) before sending a 180 Ringing message to the third UE 1115 (e.g., in response to the second call message) and/or before performing a resource reservation procedure in association with the second call message. In this case, the first UE 1105 may proceed with the first call message, and may provide an indication of a missed call from the third UE 1115. For example, as shown by reference number 1155, the first UE 1105 may receive a successful response message, such as a 200 OK message, from the second UE 1110 to proceed with the first call message associated with the second UE 1110.

In some aspects, as shown by reference number 1160, the first UE 1105 may transmit a 180 Ringing message to the third UE 1115, and/or may provide an option for a user of the first UE 1105 to switch to the second call message and/or to join a conference call with the second UE 1110 and the third UE 1115. In some aspects, the first UE 1105 may transmit a 486 Busy message to the third UE 1115 instead of the 180 Ringing message. In either case, as shown by reference number 1165, the first UE 1105 may provide an indication of the missed call from the third UE 1115. In this way, the first UE 1105 may notify a user of the first UE 1105 of the missed call from the third UE 1115, rather than failing to inform the user of the missed call when the second call message is received before the call associated with the first call message is established.

As indicated above, Fig. 11 is provided as an example. Other examples are possible and may differ from what was described in connection with Fig. 11.

Fig. 12 is a diagram illustrating an example process 1200 performed, for example, by a wireless communication device, in accordance with various aspects of the present disclosure. Example process 1200 is an example where a wireless communication device (e.g., UE 145, 250, 705, 805, 905, 1005, 1105, and/or the like) performs call handling during a UE ringing state.

As shown in Fig. 12, in some aspects, process 1200 may include transmitting, by a first wireless communication device, to at least one of a second wireless communication device or a third wireless communication device, an indication that the first wireless communication device is in a ringing state based at least in part on a first call message associated with the second wireless communication device and a second call message from the third wireless communication device, wherein the second call message is received while the first wireless communication device is in the ringing state due to the first call message (block 1210). For example, a first wireless communication device may transmit, to a second wireless communication device and a third wireless communication device, an indication that the first wireless communication device is in a ringing state based at least in part on receiving a first call message from the second wireless communication device and a second call message from the third wireless communication device. In some aspects, the second call message is received while the first wireless communication device is in the ringing state due to the first call message.

As shown in Fig. 12, in some aspects, process 1200 may include selectively proceeding, by the first wireless communication device, based on at least one of the first call message or the second call message in response to user input that indicates whether to accept at least one of the first call message, the second call message, or both the first call message and the second call message (block 1220). For example, the first wireless communication device may selectively proceed based on at least one of the first call message or the second call message. In some aspects, the first wireless communication device may selectively proceed in response to user input that indicates whether to accept at least one of the first call message, the second call message, or both the first call message and the second call message.

In some aspects, the indication includes a ringing message. In some aspects, the indication includes a session in progress message. In some aspects, the indication includes at least one of a ringing tone or a multimedia packet. In some aspects, the first wireless communication device performs a first quality of service resource reservation procedure based at least in part on the first call message (e.g., based at least in part on sending or receiving the first call message), and performs a second quality of service resource reservation procedure based at least in part on receiving the second call message.

In some aspects, the first wireless communication device obtains first contact information associated with the second wireless communication device, obtains second contact information associated with the third wireless communication device, and outputs the first contact information and the second contact information on a display of the first wireless communication device. In some aspects, the first wireless communication device provides a first option to proceed with the first call message and a second option to proceed with the second call message, and the user input includes a selection of the first option or the second option. In some aspects, the first wireless communication device provides a first option to proceed with the first call message, a second option to proceed with the second call message, and a third option to join the first wireless communication device, the second wireless communication device, and the third wireless communication device on a conference call, and the user input includes a selection of the first option, the second option, or the third option.

In some aspects, the first wireless communication device associates one of the first call message or the second call message with an answered call request, associates the other of the first call message or the second call message with an unanswered call request, allocates one or more call resources for the answered call request, and provides a busy message for the unanswered call request. In some aspects, the first wireless communication device allocates one or more call resources for a conference call and transmits one or more messages, to a conference call server, to establish the conference call, and the user input includes a selection of an option indicating that the second wireless communication device and the third wireless communication device are to be joined in the conference call.

In some aspects, the second call message from the third wireless communication device is received after the first call message is sent to or received from the second wireless communication device (e.g., while the first wireless communication device is in a ringing state based at least in part on sending a first call message to or receiving a first call message from the second wireless communication device). In some aspects, the first call message is received from the second wireless communication device (e.g., the first wireless communication device may act as a mobile terminator). In some aspects, the first call message is sent to the second wireless communication device (e.g., the first wireless communication device may act as a mobile originator).

Although Fig. 12 shows example blocks of process 1200, in some aspects, process 1200 may include additional blocks, fewer blocks, different blocks, or differently arranged blocks than those depicted in Fig. 12. Additionally, or alternatively, two or more of the blocks of process 1200 may be performed in parallel.

The foregoing disclosure provides illustration and description, but is not intended to be exhaustive or to limit the aspects to the precise form disclosed.

As used herein, the term component is intended to be broadly construed as hardware, firmware, or a combination of hardware and software. As used herein, a processor is implemented in hardware, firmware, or a combination of hardware and software.

Some aspects are described herein in connection with thresholds. As used herein, satisfying a threshold may refer to a value being greater than the threshold, greater than or equal to the threshold, less than the threshold, less than or equal to the threshold, equal to the threshold, not equal to the threshold, and/or the like.

It will be apparent that systems and/or methods, described herein, may be implemented in different forms of hardware, firmware, or a combination of hardware and software. The actual specialized control hardware or software code used to implement these systems and/or methods is not limiting of the aspects. Thus, the operation and behavior of the systems and/or methods were described herein without reference to specific software code—it being understood that software and hardware can be designed to implement the systems and/or methods based, at least in part, on the description herein. A phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the term "one" or similar language is used. Also, as used herein, the terms "has," "have," "having," and/or the like are intended to be open-ended terms. Further, the phrase "based on" is intended to mean "based, at least in part, on" unless explicitly stated otherwise.

## Claims

1. A method of wireless communication, comprising:
Transmitting (1210), by a first wireless communication device (705), a second wireless communication device (710) and to a third wireless communication device (715), an indication (730, 745) that the first wireless communication device is in a ringing state based at least in part on a first call initiation message associated with the second wireless communication device and a second call initiation message received from the third wireless communication device,
wherein the indication (745) transmitted by the first wireless communication device to the third wireless device is used to alert a user of the third wireless communication device that the first wireless communication device has received the second call initiation message and is alerting the said user of receipt of the second call initiation message, and
wherein the second call initiation message is received while the first wireless communication device is in the ringing state due to the first call initiation message; and
selectively proceeding (1220), by the first wireless communication device, based on at least one of the first call initiation message and the second call initiation message, and in response to user input that indicates whether to accept at least one of the first call initiation message, the second call initiation message, or both the first call initiation message and the second call initiation message.

2. The method of claim 1, wherein the indication includes a ringing message.

3. The method of claim 1, wherein the indication includes a session in progress message.

4. The method of claim 1, wherein the indication includes at least one of a ringing tone or a multimedia packet.

5. The method of claim 1, further comprising:
performing a first quality of service resource reservation procedure based at least in part on the first call initiation message; and
performing a second quality of service resource reservation procedure based at least in part on receiving the second call initiation message.

6. The method of claim 1, further comprising:
obtaining first contact information associated with the second wireless communication device;
obtaining second contact information associated with the third wireless communication device; and
outputting the first contact information and the second contact information on a display of the first wireless communication device.

7. The method of claim 1, further comprising providing a first option to proceed with the first call initiation message, a second option to proceed with the second call initiation message, and a third option to join the first wireless communication device, the second wireless communication device, and the third wireless communication device on a conference call, wherein the user input includes a selection of the first option, the second option, or the third option.

8. The method of claim 1, further comprising:
associating one of the selected first call initiation message and/or the second call initiation message with an answered call request;
associating the not selected call initiation message(s) with an unanswered call request;
allocating one or more call resources for the answered call request(s); and
providing a busy message for the unanswered call request.

9. The method of claim 1, further comprising allocating one or more call resources for a conference call when both call initiation messages are selected, and transmitting one or more messages, to a conference call server, to establish the conference call, wherein the user input includes a selection of an option indicating that the second wireless communication device and the third wireless communication device are to be joined in the conference call.

10. An apparatus comprising means configured to execute the steps of any one of the claims 1 to 9.

11. A computer program comprising code to perform a method according to one of the claims 1 to 9 when executed by one or more processors of a first wireless communication device.

## Patentansprüche

1. Verfahren zur drahtlosen Kommunikation, umfassend:
Übertragen (1210), durch ein erstes drahtloses Kommunikationsgerät (705), ein zweites drahtloses Kommunikationsgerät (710), und an ein drittes drahtloses Kommunikationsgerät (715), einer Anzeige (730, 745), dass sich das erste drahtlose Kommunikationsgerät in einem Rufzustand befindet, zumindest teilweise basierend auf einer ersten Rufeinleitungsnachricht, die dem zweiten drahtlosen Kommunikationsgerät zugeordnet ist, und einer zweiten Rufeinleitungsnachricht, die von dem dritten drahtlosen Kommunikationsgerät empfangen wird,
wobei die von der ersten drahtlosen Kommunikationsvorrichtung an die dritte drahtlose Vorrichtung übertragene Anzeige (745) verwendet wird, um einen Benutzer der dritten drahtlosen Kommunikationsvorrichtung zu benachrichtigen, dass die erste drahtlose Kommunikationsvorrichtung die zweite Rufeinleitungsnachricht empfangen hat und den genannten Benutzer über den Empfang der zweiten Rufeinleitungsnachricht benachrichtigt, und wobei die zweite Rufeinleitungsnachricht empfangen wird, während sich die erste drahtlose Kommunikationsvorrichtung aufgrund der ersten Rufeinleitungsnachricht im Klingelzustand befindet; und
selektiv Fortschreiten (1220) durch das erste drahtlose Kommunikationsgerät, basierend auf mindestens einer der ersten Rufeinleitungsnachricht und der zweiten Rufeinleitungsnachricht und als Reaktion auf eine Benutzereingabe, die anzeigt, ob mindestens eine der ersten Rufeinleitungsnachricht, der zweiten Rufeinleitungsnachricht oder sowohl die erste Rufeinleitungsnachricht als auch die zweite Rufeinleitungsnachricht angenommen werden soll.

2. Verfahren gemäß Anspruch 1, wobei die Anzeige eine Klingelmeldung enthält.

3. Verfahren gemäß Anspruch 1, wobei die Anzeige eine Nachricht über eine laufende Sitzung enthält.

4. Verfahren gemäß Anspruch 1, wobei die Anzeige mindestens einen Rufton oder ein Multimedia-Paket enthält.

5. Verfahren gemäß Anspruch 1, weiterhin umfassend:
Durchführen einer ersten Dienstqualitäts-Ressourcen-Reservierungsprozedur wenigstens teilweise basierend auf der ersten Rufeinleitungsnachricht; und
Durchführen einer zweiten Dienstgüte-Ressourcen-Reservierungsprozedur wenigstens teilweise basierend auf dem Empfang der zweiten Rufeinleitungsnachricht.

6. Das Verfahren gemäß Anspruch 1, weiterhin umfassend:
Erhalten von ersten Kontaktinformationen, die mit dem zweiten drahtlosen Kommunikationsgerät verbunden sind;
Erhalten von zweiten Kontaktinformationen, die mit dem dritten drahtlosen Kommunikationsgerät verbunden sind; und
Ausgeben der ersten Kontaktinformationen und der zweiten Kontaktinformationen auf einer Anzeige der ersten drahtlosen Kommunikationsvorrichtung.

7. Verfahren gemäß Anspruch 1, weiterhin umfassend das Bereitstellen einer ersten Option, um mit der ersten Rufeinleitungsnachricht fortzuschreiten, einer zweiten Option, um mit der zweiten Rufeinleitungsnachricht fortzuschreiten, und einer dritten Option, um das erste drahtlose Kommunikationsgerät, das zweite drahtlose Kommunikationsgerät und das dritte drahtlose Kommunikationsgerät zu einer Telefonkonferenz zusammenzuschalten, wobei die Benutzereingabe eine Auswahl der ersten Option, der zweiten Option oder der dritten Option umfasst.

8. Verfahren gemäß Anspruch 1, weiterhin umfassend:
Zuordnen einer der ausgewählten ersten Rufeinleitungsnachricht und/oder der zweiten Rufeinleitungsnachricht zu einer beantworteten Rufanforderung;
Zuordnen der nicht ausgewählten Rufeinleitungsnachricht(en) zu einer unbeantworteten Rufanforderung;
Zuteilen einer oder mehrerer Anrufressourcen für die beantwortete(n) Anrufanforderung(en); und
Bereitstellen einer Besetztmeldung für die unbeantwortete Gesprächsanforderung.

9. Verfahren gemäß Anspruch 1, weiterhin umfassend das Zuweisen einer oder mehrerer Anrufressourcen für einen Konferenzanruf, wenn beide Rufeinleitungsnachrichten ausgewählt sind, und das Übertragen einer oder mehrerer Nachrichten an einen Konferenzanrufserver, um den Konferenzanruf einzurichten, wobei die Benutzereingabe eine Auswahl einer Option umfasst, die anzeigt, dass das zweite drahtlose Kommunikationsgerät und das dritte drahtlose Kommunikationsgerät in den Konferenzanruf einbezogen werden sollen.

10. Vorrichtung mit Mitteln, die zur Ausführung der Schritte nach einem der Ansprüche 1 bis 9 eingerichtet sind.

11. Computerprogramm umfassend Code zur Durchführung eines Verfahrens nach einem der Ansprüche 1 bis 9, wenn es von einem oder mehreren Prozessoren eines ersten drahtlosen Kommunikationsgeräts ausgeführt wird.

## Revendications

1. Un procédé de communication sans fil, comprenant :
la transmission (1210), par un premier dispositif de communication sans fil (705), à un deuxième dispositif de communication sans fil (710) et à un troisième dispositif de communication sans fil (715), d'une indication (730, 745) que le premier dispositif de communication sans fil est dans un état de sonnerie sur la base au moins en partie d'un premier message de lancement d'appel associé au deuxième dispositif de communication sans fil et d'un second message de lancement d'appel reçu depuis le troisième dispositif de communication sans fil,
dans lequel l'indication (745) transmise par le premier dispositif de communication sans fil au troisième dispositif de communication sans fil est utilisée pour alerter un utilisateur du troisième dispositif de communication sans fil que le premier dispositif de communication sans fil a reçu le second message de lancement d'appel et est en train d'alerter ledit utilisateur de la réception du second message de lancement d'appel, et
dans lequel le second message de lancement d'appel est reçu pendant que le premier dispositif de communication sans fil est dans l'état de sonnerie en raison du premier message de lancement d'appel ; et
la poursuite sélective (1220), par le premier dispositif de communication sans fil, sur la base d'au moins l'un parmi le premier message de lancement d'appel et le second message de lancement d'appel, et en réponse à une saisie par l'utilisateur indiquant s'il faut accepter au moins l'un parmi le premier message de lancement d'appel et le second message de lancement d'appel, ou à la fois le premier message de lancement d'appel et le second message de lancement d'appel.

2. Le procédé selon la revendication 1, dans lequel l'indication inclut un message de sonnerie.

3. Le procédé selon la revendication 1, dans lequel l'indication inclut un message de session en cours.

4. Le procédé selon la revendication 1, dans lequel l'indication inclut au moins l'un parmi une tonalité de sonnerie ou un paquet multimedia.

5. Le procédé selon la revendication 1, comprenant en outre :
la réalisation d'une première procédure de réservation de ressource de qualité de service sur la base au moins en partie du premier message de lancement d'appel ; et
la réalisation d'une seconde procédure de réservation de ressource de qualité de service sur la base au moins en partie de la réception du second message de lancement d'appel.

6. Le procédé selon la revendication 1, comprenant en outre :
l'obtention d'une première information de contact associée au deuxième dispositif de communication sans fil ;
l'obtention d'une seconde information de contact associée au troisième dispositif de communication sans fil ; et
la délivrance de la première information de contact et de la seconde information de contact sur un affichage du premier dispositif de communication sans fil.

7. Le procédé selon la revendication 1, comprenant en outre la soumission d'une première option de poursuivre avec le premier message de lancement d'appel, d'une deuxième option de poursuivre avec le second message de lancement d'appel, et d'une troisième option de rejoindre le premier dispositif de communication sans fil, le deuxième dispositif de communication sans fil et le troisième dispositif de communication sans fil dans une conférence téléphonique, dans lequel la saisie par l'utilisateur inclut une sélection de la première option, la deuxième option ou la troisième option.

8. Le procédé selon la revendication 1, comprenant en outre :
l'association de l'un parmi le premier message de lancement d'appel et/ou le second message de lancement d'appel sélectionnés à une requête d'appel répondu ;
l'association du ou des messages de lancement d'appel non sélectionnés à une requête d'appel non répondu ;
l'allocation d'une ou plusieurs ressources d'appel pour la ou les requêtes d'appel répondu ; et
la soumission d'un message occupé pour la requête d'appel non répondu.

9. Le procédé selon la revendication 1, comprenant en outre l'allocation d'une ou plusieurs ressources d'appel pour une conférence téléphonique lorsque les deux messages de lancement d'appel sont sélectionnés, et la transmission d'un ou plusieurs messages, à un serveur de conférence téléphonique, pour établir la conférence téléphonique, dans lequel la saisie par l'utilisateur inclut une sélection d'une option indiquant que le deuxième dispositif de communication sans fil et le troisième dispositif de communication sans fil doivent rejoindre la conférence téléphonique.

10. Un appareil comprenant des moyens configurés pour exécuter les étapes selon l'une des revendications 1 à 9.

11. Un programme de calculateur comprenant un code pour réaliser un procédé selon l'une des revendications 1 à 9 lorsqu'il est exécuté par un ou plusieurs processeurs d'un premier dispositif de communication sans fil.
